(19) Europäisches Patentamt
European Patent Office
Office européen des brevets

(11) **EP 4 361 903 A1**

(12) **EUROPEAN PATENT APPLICATION**

(43) Date of publication:
**01.05.2024 Bulletin 2024/18**

(21) Application number: **22203520.6**

(22) Date of filing: **25.10.2022**

(51) International Patent Classification (IPC):
*G06N 20/00* (2019.01)     *G06N 3/084* (2023.01)

(52) Cooperative Patent Classification (CPC):
**G06N 3/04; G06N 3/084; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ASML Netherlands B.V.**
**5500 AH Veldhoven (NL)**

(72) Inventor: **XIA, Han**
**5500 AH Veldhoven (NL)**

(74) Representative: **ASML Netherlands B.V.**
**Corporate Intellectual Property**
**P.O. Box 324**
**5500 AH Veldhoven (NL)**

(54) **FAILURE MODE IDENTIFICATION**

(57) A computer-implemented method of identifying one or more failures in a system comprising multiple modules, each module having a respective one or more failure modes. The method comprises providing a plurality of measurements as inputs to an artificial neural network having at least first and second hidden layers and an output layer, each of the layers comprising respective pluralities of nodes. The method also comprises processing the failure mode values using the output layer to determine one or more output values indicative of whether respective failure modes of the system have occurred.

FIG. 5

EP 4 361 903 A1

**Description**

The present invention relates to systems and methods of identifying failures in systems that comprise multiple modules that can fail in different ways. The present invention has particular, but not exclusive, application to laser systems, e.g. laser systems that are used for EUV lithography.

BACKGROUND

A lithographic apparatus is a machine constructed to apply a desired pattern onto a substrate. A lithographic apparatus can be used, for example, in the manufacture of integrated circuits (ICs). A lithographic apparatus may for example project a pattern from a patterning device (e.g. a mask) onto a layer of radiation-sensitive material (resist) provided on a substrate.

The wavelength of radiation used by a lithographic apparatus to project a pattern onto a substrate determines the minimum size of features which can be formed on that substrate. A lithographic apparatus which uses EUV radiation, being electromagnetic radiation having a wavelength within the range 4-20 nm, may be used to form smaller features on a substrate than a conventional lithographic apparatus (which may for example use electromagnetic radiation with a wavelength of 193 nm).

Laser systems for generating the EUV radiation are typically very complex, being formed from many interacting modules, each comprising many components (e.g. tens or hundreds of components). The modules are operated simultaneously to generate, amplify and manipulate high power laser beams that can be used to generate EUV radiation. Sub-optimal performance of the laser system caused by failures in one or more of the modules (e.g. failures in one or more components in a module) can be time consuming and costly to diagnose and rectify. For example, swapping components by trial and error to identify a source of the sub-optimal performance may require many hours of highly skilled operator time and lead to prolonged downtime for manufacturing. Large inventories of spare parts (i.e. replacement components) may also be required to eliminate correctly functioning components from further consideration by a process of elimination.

SUMMARY OF THE INVENTION

The present disclosure addresses or at least ameliorates difficulties in identifying failures in systems comprising multiple modules that can each fail (i.e. become inoperative or otherwise perform sub-optimally) in different ways.

Thus, according to a first aspect of the present invention, there is provided a computer-implemented method of identifying one or more failures in a system comprising multiple modules, each module having a respective one or more failure modes. The method may comprise providing a plurality of measurements as inputs to an artificial neural network having at least first and second hidden layers and an output layer, each of the layers comprising respective pluralities of nodes. The measurements may comprise a value of at least one performance indicator for the system and a plurality of parameter values. Each parameter value may be indicative of a configuration of a respective one or more parts of the system. The method may further comprise, for each of a plurality of subsets of the nodes of the first hidden layer, processing a respective one or more of the parameter values to determine a score indicative of a contribution to the value of the performance indicator that is attributable to the configuration of the part or parts of the system corresponding to the one or more of the parameter values. The method may also comprise providing subsets of the scores to respective subsets of the nodes of the second hidden layer. Each subset of the nodes may be associated with a respective one of the modules of the system. The subset of the scores for each of the subsets of the nodes may be selected according to a correspondence between the module for the subset of nodes and the part or parts of the system associated with each score. The method may further comprise, for each of the subsets of the nodes of the second hidden layer, processing the subset of the scores to determine one or more failure mode values indicative of whether respective failure modes of the module associated with the subset have occurred. The method may also comprise processing the failure mode values using the output layer to determine one or more output values indicative of whether respective failure modes of the system have occurred.

The parameter values may be indicative of settings for the one or more parts that can be adjusted by an operator of the system or by an automatic control system, e.g. positions of the one or more movable parts, or voltages applied to, or electric currents provided to, one or more electronic parts of the system. The parameter values may be measured using one or more sensors provided in one or more of the modules, e.g. image sensors, such as cameras or charge coupled devices (CCDs), laser power meters, temperature sensors, pressure sensors, gas sensors, voltmeters, ammeters, inertial sensors, accelerometers etc.

In some implementations, each subset of nodes of the first or the second hidden layer may comprise a single node or a plurality of nodes that does not include all the nodes in the layer. One or more of the nodes may belong to more than one subset in some cases, i.e. the subsets may be overlapping. Alternatively, the subsets may be non-overlapping. Similarly, in some implementations, the subsets of the scores may comprise a single score or a plurality of scores that does not include all the scores. One or more of the scores may belong to more than one subset in some cases.

The failure modes of the modules may correspond to different respective potential causes for changes (e.g. worsening) in the performance indicator value of the system. For example, one or more of the failure modes of a module may be associated with a component of the module becoming damaged, degraded, inoperative, exhausted, misaligned or otherwise made to operate in a sub-optimal manner. For example, where the system is a laser system comprising a seed laser, one failure mode may be that the seed laser has become misaligned. The failure modes of the system may be the same as (or alternatively, different from) the failure modes of the modules, e.g. there may be a one-to-one correspondence between the failure modes of the system and the failure modes of (all) the modules. In some implementations, the output values may be respective binary values indicative of whether or not a corresponding failure mode has occurred. The output values may (collectively) indicate that no failure mode has occurred, a single failure mode has occurred, or more than one failure mode has occurred, for example.

The correspondence between the module for the subset of nodes and the part or parts of the system associated with each of the scores may be defined by which of the modules the part or parts are located in, or which of the modules controls the part or parts.

Processing the respective one or more of the parameter values to determine any of the scores may comprise providing the one or more parameter values as arguments to a corresponding model function that predicts (or estimates) the value of the performance indicator based on the one or more parameter values. The method may then further comprise calculating the score based on an output of the model function and, optionally, the value of the performance indicator for the system.

In some implementations, the model function may comprise an artificial neural network trained to predict the value of the performance indicator based on the one or more parameter values. A detailed understanding of how the one or more parameter values affects the performance indicator may be unnecessary in such cases, e.g. it may not be necessary to provide an explicit physical model of how the parameter values affect the performance indicator. Suitable training data for training the neural network may be obtained by varying the one or more parameters (e.g. systematically and/or randomly) and measuring corresponding values of the performance indicator. The neural network for predicting the value of the performance indicator may be trained by optimising a loss function comparing a prediction of the value of the performance indicator for parameter values in the training data and the measured values of the performance indicator for those parameter values. It is not essential that a neural network be used for the model function, however, and in some implementations, the model function may have only some or no adjustable parameters, e.g. parameters that can be optimised by training, for example.

The model function may be a non-linear function in some examples, e.g. a Gaussian function, a binary step function, a caustic function, a Frantz-Nodvik function, a sigmoid function, or a tanh function. In general, any mathematical function that can be used to capture the dependence of the values of the performance indicator on the one or more parameter values can be used. Differentiable functions may be preferred, however, so that the artificial neural network comprising the first and second hidden layers may be trained by propagating gradients of a loss function back through the first hidden layer in order to adjust weights associated with the nodes of the hidden layer, i.e. using a backpropagation algorithm, such as stochastic gradient descent or mini-batch gradient descent. Therefore, in some implementations, the model function is a differentiable function of the one or more parameter values. Different ones of the model functions may have different mathematical forms, i.e. be different mathematical functions (not just differing by being defined by numerical parameters). For example, different ones of the model functions may be defined by different numbers of corresponding numerical parameters. Alternatively or additionally, the set of model functions may include a plurality of model functions which are different ones of the group consisting of: Gaussian functions, binary step functions, caustic functions (e.g., a function describing how the size (e.g. width) of a laser beam varies along the path of the laser beam, i.e. along its direction of propagation, as may be determined for a focussed Gaussian beam, for example), Frantz-Nodvik functions, sigmoid functions, or tanh functions.

In some implementations, the model function provides a model of a physical process carried out by the part or parts of the system corresponding to the one or more parameter values, e.g. the model function may be derived from a theoretical or empirical model of the physical process. For example, where the system is a laser system, a part or parts of the system may comprise an amplifier (or pre-amplifier) for amplifying an input laser beam to generate a higher power output laser beam. The model of a physical process may therefore comprise a model for how the amplification process depends on the one or more parameter values. For example, a function that is used to determine an expected gain (i.e. efficiency) for the amplification process, e.g. a Frantz-Nodvik function may be used. In such cases, the model function may comprise one or more of the gain coefficients that are derived from one or more of the parameter values. For example, one or more of the parameter values may be indicative of a pressure of gas inside a gas cell used in the amplification process. Compared to the use of a neural network with more generic activation functions (e.g. sigmoid, ReLU etc.), the choice of model functions corresponding to physical models of how the part or parts of the system operate may improve the interpretability of the results generated by the neural network. Physically-derived model functions may also allow development and extension of the neural network for different modules and/or failure modes in a systematic manner, e.g. a model function may in some cases be improved using a more advanced model of the physical process. The method may therefore incorporate domain expertise. In some cases, this may reduce the number of parameters used for the model function (thereby reducing memory and processing requirements) and/or limit the range over which these parameters may vary. Fewer training (e.g. back propagation) iterations may therefore be needed to optimize the parameters. The accuracy of the model functions may also be increased and/or the amount of training data needed to obtain accurate results may be reduced. Using physically-derived model functions may also prevent the neural network from overfitting as the model functions may provide more rigid constraints on the neural network compared to e.g. a dense (fully connected) feed forward layer with generic activation functions. Thus, the method may be more robust to changes in the training data and/or the provided measurements than other approaches that use more generic neural network systems. In particular, using physically derived model functions and constructing the topology of the neural network according to the system under investigation may avoid the neural network becoming overcomplicated with redundant layers and/or parameters.

In some implementations, the plurality of measurements may comprise a sequence of measurements comprising measurements made at different respective times. The model function may then predict the value of the performance indicator based on measurements made at two or more different times. The model function may include an expected time dependence of the performance indicator associated with part or parts of the system corresponding to the one or more parameter values, e.g. to account for wear on the part(s) or depletion of a resource needed for the part(s) to operate correctly.

As noted above, the artificial neural network comprising the first and second hidden layers and the output layer may have been trained to optimise a loss function for a plurality of measurements, with the loss function comparing failure modes predicted from the output values for the measurements and the failure modes corresponding to the measurements that are known to have occurred. Thus, the artificial neural network may have been trained on training data comprising a plurality of data items, each data item comprising measurements and one or more ("ground truth") failure modes corresponding to the measurements that are known to have occurred. The artificial neural network may therefore, in some cases, be trained using data collected during servicing and/or maintenance of one or more of the modules and/or the system. The training may be a supervised learning procedure, e.g. carried out by backpropagation. In some implementations, the training data may be acquired from one or more first systems (e.g. test systems) and the trained neural network is then used to identify failures in one or more second systems (e.g. systems for which sufficient training data is not available). The first system(s) may have the same configuration as the second system(s).

In each item of the training data, the data which is to be produced by each node of the output layer may take one of two values: a first value (e.g. zero) in the case of a module which involved with (i.e. implicated in) the failure mode, and a second value (e.g. one) in the case of a module which is involved with the failure mode. Optionally, when the neural network is in use, a threshold may be applied to a real-valued provisional output value of each output node, to generate a corresponding binary output value, indicative of whether the failure mode involves the corresponding module.

In some implementations, the method may further comprise selecting one or more of the modules based on the output values. The selected one or more of the modules may then be serviced or replaced in some instances. Alternatively or additionally, one or more parts of the system may be selected based on the output values. The selected one or more parts of the system may then be serviced or replaced. The method may therefore reduce downtime for the system caused by operators of the system needing to determine which module and/or part(s) to service or replace. The selected one or more modules (and/or one or more parts) may be indicated to a user or observer of the system, e.g. visually, audibly, or in some other way.

In some implementations, the method may therefore comprise providing an indication to a user and/or operator of the system (or of one or more of the modules) based on one or more of the output values. For example, a display (e.g. a display of a computer device or a mobile device) may be updated to indicate to the user that one or more of the failure modes is likely to have occurred based on the output values determined by the artificial neural network. Alternatively or additionally, an audible indication of the failure modes may be provided, e.g. through an alarm or voice assistant, and/or some other form of sensory indication, such as a vibration, may be provided.

One particular application of the present disclosure is to laser systems, e.g. laser systems used to generate EUV radiation. In some implementations, the system may therefore be a laser system. In such cases, the laser beam may pass through each of the modules of the laser system once (or more than once), for example. The performance indicator may be a power of the laser beam generated by the laser system (e.g. a power measured using a power meter), although in general other performance indicators associated with the laser beam can be used (additionally or alternatively), e.g. the spectrum (i.e. wavelength distribution), spatial distribution (e.g. as measured using an image sensor), beam size, beam position, pulse duration, pulse shape, chirp, peak power stability, quality factor for the beam (e.g. a measure of the residuals when fitting a 2D Gaussian to the spatial profile of the beam) etc. The power of the laser beam may be an average power (e.g. mean power) or a peak power, for example. The parameter values may each be indicative of one or more properties of the laser beam within one or more of the modules. The parameter values may be indicative of the configuration of the part(s) of the system that generates or modifies the laser beam as it propagates through the system. For example, the parameter values may comprise positions of the beam at one or more points along the path of the beam, e.g. a centroid position or position of peak intensity for the beam in a plane perpendicular to the direction of propagation of the beam. Thus, parameter values characterising the position of the beam may be indicative of misalignments of the beam at the one or more points along the path of the beam. In some cases, such misalignments may be attributed to the one or more parts in respective modules of the laser system.

In some implementations, processing the respective one or more of the parameter values to determine the score may comprise using the one or more parameter values indicative of properties of the laser beam to determine an expected power of the laser beam generated by the laser system. The score may then be based on a comparison of the expected power with the value of the power of the laser beam generated by the system provided as the value of the performance indicator.

In some implementations, each output value may be indicative of a respective contribution to the value of the performance indicator that is attributable to the failure mode associated with the output value. The output values may therefore be used to identify root causes (i.e. failure modes) for changes in the performance indicator that may be caused by more than one of the failure modes.

According to a second aspect of the present disclosure, there is provided a computer-implemented method of training an artificial neural network to identify one or more failures in a system comprising multiple modules. Each of the modules may have one or more failure modes. The artificial neural network may have at least first and second hidden layers and an output layer, each of the layers comprising respective pluralities of nodes. The method may comprise providing a plurality of measurements as inputs to the artificial neural network. The measurements may comprise a value of a performance indicator for the system and a plurality of parameter values. Each parameter value may be indicative of a configuration of a respective one or more parts of the system. The method may further comprise, for each of a plurality of subsets of the nodes of the first hidden layer, processing a respective one or more of the parameter values to determine a score indicative of a contribution to the value of the performance indicator that is attributable to the configuration of the part or parts of the system corresponding to the one or more of the parameter values. The method may also comprise providing subsets of the scores to respective subsets of the nodes of the second hidden layer. Each subset of the nodes may be associated with a respective one of the modules of the system. The subset of the scores for each of the subsets of the nodes may be selected according to a correspondence between the module for the subset of nodes and the part or parts of the system associated with each score. The method may further comprise, for each of the subsets of the nodes of the second hidden layer, processing the subset of the scores to determine one or more failure mode values indicative of whether respective failure modes of the module associated with the subset have occurred. The method may also comprise processing the failure mode values using the output layer to determine one or more output values indicative of whether respective failure modes of the system have occurred. The method may also include adjusting parameters of the artificial neural network to optimise a loss function comparing the output values of the artificial neural network for the measurements and the failure modes corresponding to the measurements that are known to have occurred.

According to another aspect of the present disclosure, there is provided a system comprising: one or more computers and one or more storage devices storing instructions that, when executed by the one or more computers, cause the one or more computers to perform the respective operations of the method of the first or second aspect of the present disclosure.

According to a still further aspect of the present disclosure, there is provided one or more computer-readable storage media storing instructions that when executed by one or more computers cause the one or more computers to perform the respective operations of the method of the first or second aspect of the present disclosure.

Although the present disclosure is exemplified with respect to a laser system, the system and methods described herein may be applied to many different types of system comprising modules that each have one or more failure modes. For example, the system may comprise some or all of a production line used to manufacture a product, the system comprising modules performing respective operations on the product during the manufacturing process. In some examples, the system may comprise a chemical or biochemical system for manufacturing a chemical or biochemical product, the system comprising modules for performing different chemical, biochemical or physical transformations of the product. In such cases, the failure modes for a module may, for example, comprise a sub-optimal temperature, pressure, voltage or reagent concentration, such that the transformation cannot occur or occurs only with a low yield.

BRIEF DESCRIPTION OF THE DRAWINGS

Embodiments of the invention will now be described, by way of example only, with reference to the accompanying schematic drawing in which corresponding reference symbols indicate corresponding parts, and in which:

Figure 1 depicts a lithographic apparatus;
Figure 2 is a schematic plan view of a drive laser system;

Figure 3 is a schematic plan view of a seed laser system;

Figure 4 is a graph showing a change in a performance indicator for a system over time and the performance of parts of the system over time;

Figure 5 is a schematic diagram of an artificial neural network; and

Figure 6 is a flow chart of a method of identifying failures in systems comprising multiple modules.

DETAILED DESCRIPTION

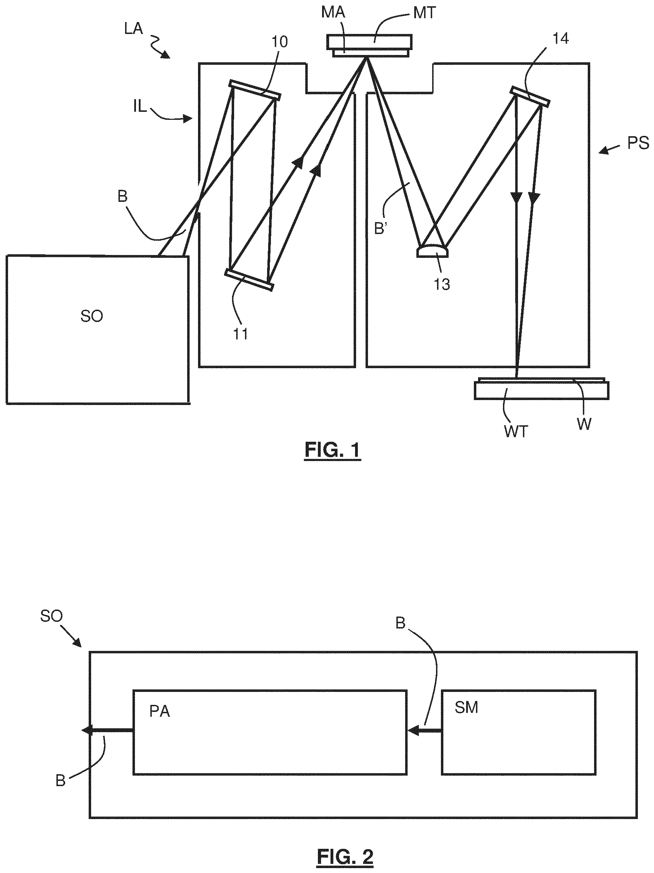

Figure 1 shows an exemplary lithographic system including a radiation source SO. It will be appreciated that the present invention is not limited to only lithographic systems and/or radiation sources SO, but finds particular application thereto. The lithographic system comprises a radiation source SO and a lithographic apparatus LA. The radiation source SO is configured to generate an extreme ultraviolet (EUV) radiation beam B. The lithographic apparatus LA comprises an illumination system IL, a support structure MT configured to support a patterning device MA (e.g. a mask), a projection system PS and a substrate table WT configured to support a substrate W. The illumination system IL is configured to condition the radiation beam B before it is incident upon the patterning device MA. The projection system is configured to project the radiation beam B (now patterned by the mask MA) onto the substrate W. The substrate W may include previously formed patterns. Where this is the case, the lithographic apparatus aligns the patterned radiation beam B with a pattern previously formed on the substrate W.

The radiation source SO, illumination system IL, and projection system PS may all be constructed and arranged such that they can be isolated from the external environment. A gas at a pressure below atmospheric pressure (e.g. hydrogen) may be provided in the radiation source SO. A vacuum may be provided in illumination system IL and/or the projection system PS. A small amount of gas (e.g. hydrogen) at a pressure well below atmospheric pressure may be provided in the illumination system IL and/or the projection system PS.

The radiation source SO shown in Figure 1 is of a type which may be referred to as a laser produced plasma (LPP) source. A laser, which may for example be a $CO_2$ laser (other types of laser, such as a solid state laser may be used instead), is arranged to deposit energy via a laser beam into a fuel, such as tin (Sn) which is provided from a fuel emitter. Although tin is referred to in the following description, any suitable fuel may be used. The fuel may for example be in liquid form, and may for example be a metal or alloy. The fuel emitter may comprise a nozzle configured to direct tin, e.g. in the form of droplets, along a trajectory towards a plasma formation region. The laser beam is incident upon the tin at the plasma formation region. The deposition of laser energy into the tin creates a plasma at the plasma formation region. Radiation, including EUV radiation, is emitted from the plasma during de-excitation and recombination of ions of the plasma.

The EUV radiation is collected and focused by a near normal incidence radiation collector (sometimes referred to more generally as a normal incidence radiation collector). The collector may have a multilayer structure which is arranged to reflect EUV radiation (e.g. EUV radiation having a desired wavelength such as 13.5 nm). The collector may have an elliptical configuration, having two ellipse focal points. A first focal point may be at the plasma formation region, and a second focal point may be at an intermediate focus, as discussed below.

The laser may be separated from the radiation source SO. Where this is the case, the laser beam may be passed from the laser to the radiation source SO with the aid of a beam delivery system (not shown) comprising, for example, suitable directing mirrors and/or a beam expander, and/or other optics. The laser and the radiation source SO may together be considered to be a radiation system.

Radiation that is reflected by the collector forms a radiation beam B. The radiation beam B is focused at a point to form an image of the plasma formation region, which acts as a virtual radiation source for the illumination system IL. The point at which the radiation beam B is focused may be referred to as the intermediate focus. The radiation source SO is arranged such that the intermediate focus is located at or near to an opening in an enclosing structure of the radiation source.

The radiation beam B passes from the radiation source SO into the illumination system IL, which is configured to condition the radiation beam. The illumination system IL may include a facetted field mirror device 10 and a facetted pupil mirror device 11. The faceted field mirror device 10 and faceted pupil mirror device 11 together provide the radiation beam B with a desired cross-sectional shape and a desired angular distribution. The radiation beam B passes from the illumination system IL and is incident upon the patterning device MA held by the support structure MT. The patterning device MA reflects and patterns the radiation beam B. The illumination system IL may include other mirrors or devices in addition to or instead of the faceted field mirror device 10 and faceted pupil mirror device 11.

Following reflection from the patterning device MA the patterned radiation beam B enters the projection system PS. The projection system comprises a plurality of mirrors 13, 14 which are configured to project the radiation beam B onto a substrate W held by the substrate table WT. The projection system PS may apply a reduction factor to the radiation beam, forming an image with features that are smaller than corresponding features on the patterning device MA. A reduction factor of 4 may for example be applied. Although the projection system PS has two mirrors 13, 14 in Figure 1, the projection system may include any number of mirrors (e.g. six mirrors).

The radiation sources SO shown in Figure 1 may include components which are not illustrated. For example, a spectral filter may be provided in the radiation source. The spectral filter may be substantially transmissive for EUV radiation but substantially blocking for other wavelengths of radiation such as infrared radiation.

Figure 2 shows an exemplary radiation source SO comprising a seed module SM that emits beam B and a power amplifier PA that receives the beam B from the seed module SM and emits a higher power beam B for providing to the lithographic apparatus.

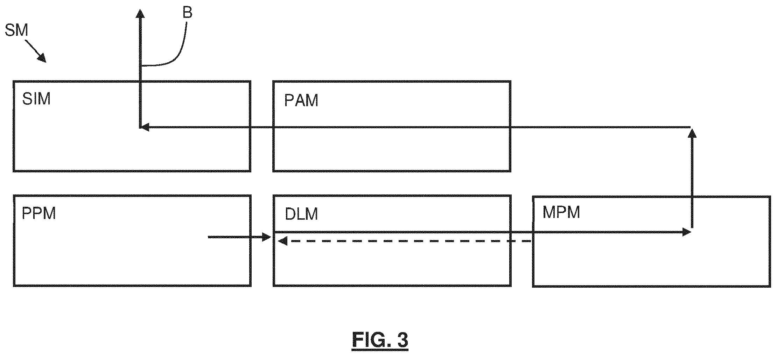

Figure 3 shows an exemplary seed module SM that itself comprises a plurality of modules, including a pre-pulse module PPM, a main pulse module MPM, a pre-amplifier module PAM, a delay line module DLM and a seed isolation module SIM. Optical radiation from the pre-pulse module PPM passes through the delay line module DLM, the pre-amplifier module PAM and the seed isolation module SIM. Optical radiation from the main-pulse module MPM passes into the delay line module DLM (as indicated by the dashed lines with arrows in Figure 8), where it is reflected such that it passes back through the delay line module DLM and then through the pre-amplifier module PAM and the seed isolation module SIM. The beam B is produced by the optical radiation leaving the seed module SM through the seed isolation module SIM.

Each of the modules of the seed module SM comprises components that affect the properties of the beam B, such as the power, spectrum, pulse length, pulse shape, quality and/or alignment of the beam B. For example: the pre-pulse module PPM and the main-pulse module MPM may each comprise a seed laser and an electro-optic modulator (EOM); the delay line module DLM may comprise a pulse detection interlock; and the pre-amplifier module PAM and the seed isolation module SIM may each comprise one or more fast interlocks. The seed lasers themselves of course comprise a plurality of components, such as driver electronics, Q-switches, acousto-optic modulators (AOMs), etc. The pre-amplifier module PAM may comprise carbon dioxide gas maintained at a particular pressure for efficiently amplifying the beam B. Molecular sieves may be provided to remove impurities, such as moisture, from the gas. Other components may include one or more fluence limiters.

Optimum performance of the seed module SM is generally only possible if each of the module's components is functioning properly (i.e. functioning within acceptable tolerances). In particular, proper functioning of the components is necessary to ensure that the power of the beam B output by the seed module SM is high enough (after further amplification) for subsequent EUV generation. Failure, degradation and/or sub-optimal performance of one or more of the components may be reflected in a change of one or more performance indicators that are measured to determine whether the system (i.e. the seed module SM in this example) is operating correctly. One important performance indicator is the power of the beam B output by the seed module SM. However, the complexity of the system means that operators of the system may face considerable difficulties in determining what has caused a decrease in a performance indicator, particularly when multiple failure modes may exist at the same time, e.g. because multiple components have failed (e.g. are operating incorrectly) at the same time.

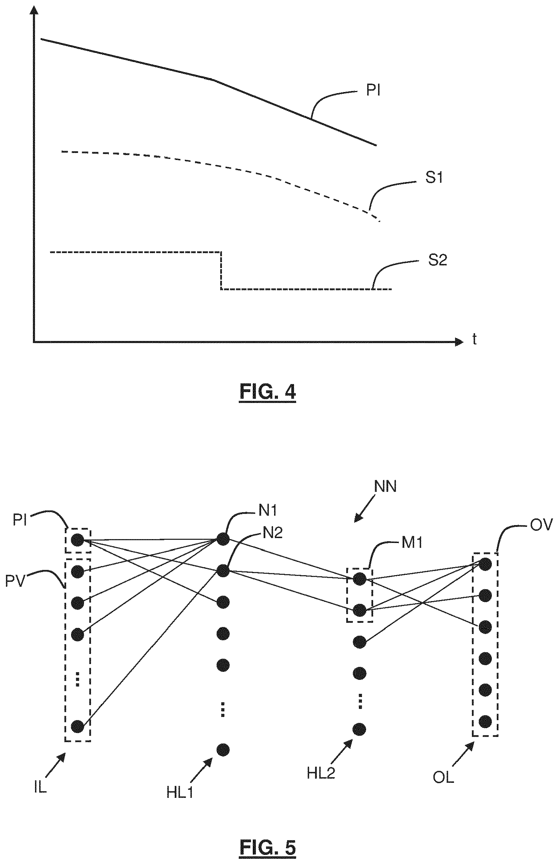

Figure 4 shows a graph with a horizontal (X) axis of time and a vertical (Y) axis for a performance indicator, such as laser power. The curve labelled PI indicates exemplary measurements of the performance indicator for different times. The curves labelled S1 and S2 in Figure 4 (shown by a dashed and a broken line respectively) indicate the contributions of two different parts of the system to the change in the performance indicator PI over time. The shapes of the curves S1, S2 can be estimated according to how the different parts of the system are expected to behave over time, e.g. through the use of measurements of parameters characterising the parts in combination with physical models of how the performance indicator depends on the parameters.

Figure 5 shows a diagram of an exemplary artificial neural network NN comprising an input layer IL, a first hidden layer HL1, a second hidden layer HL2 and an output layer OL. The input layer IL comprises a plurality of nodes receiving respective measurements provided as an input to the neural network NN. The measurements comprise a performance indicator value PI and a plurality of parameter values PV. The first hidden layer HL1 comprises a plurality of nodes N1, N2. The subsets of the nodes may include just a single node N1, N2, as shown in Figure 5 in some cases. The subsets of the nodes process one or more of the parameter values PV, optionally along with the performance indicator PI value, to determine a score indicative of a contribution to the value of the performance indicator that is attributable to the configuration of the part or parts of the system corresponding to the one or more of the parameter values PV. Processing the parameter values PV may comprise taking a weighted sum of the parameter values (with the weights being determined during training of the neural network NN). A bias value may be added to the weighted sum (the bias value may be fixed or otherwise determined during training of the neural network NN). The weighted sum is then processed by an activation function to determine the score. The activation function, which may be referred to as a "model function", may in some cases be derived from a physical model, as described below, for example.

In the present example, the neural network is configured to identify failures in a laser system used for lithography, e.g. EUV lithography, such as the seed laser SM described above in connection with Figure 3. The laser system comprises multiple modules that each have one or more failure modes. In one example, the performance indicator PI is a peak power of a laser beam generated by the laser system, e.g. a power measured at a target position inside a lithographic apparatus LA, such as the one shown in Figure 1. The parameter values may comprise a position of the target for the laser beam, a position of a centroid of the laser beam (e.g. a position of maximum intensity) and a beam size (e.g. a standard deviation of the spatial distribution of the laser beam intensity). The target and centroid positions and the beam size may each be measured in a plane perpendicular to the direction of propagation of the beam, e.g. using an image sensor such as a charge coupled device (CCD) camera. The expected size of the laser beam at the target position may, in some cases be determined using a Gaussian distribution, e.g.

$$ g(x) = \frac{1}{\sqrt{2\pi\sigma^2}} \exp\left( -\frac{(x - \mu)^2}{2\sigma^2} \right) $$

in which x is the target position, $\mu$ is the beam centroid position and $\sigma$ is the beam size (standard deviation). Values of some or all of these parameters may be included in the parameter values provided to the node. The score for the node may be the value of g(x), or the value of g(x) multiplied by the peak power, for example. The score may therefore be used to account for misalignments between the laser beam generated by the laser system and the target position.

Another of the nodes N2 may process one or more other parameter values. For example, the laser system may comprise a pre-amplifier module PAM that relies on a discharge through a gas mixture to provide a gain medium for amplifying a laser beam (e.g. a gas mixture for a carbon dioxide or a nitrogen laser). The parameter values may then comprise a pressure of the gas mixture, for example. The effect of the pressure of the gas mixture on the power of the laser beam may be estimated, for example, using a Frantz-Nodvik function, e.g.

$$ E_{\text{out}} = E_{\text{sat}} \ln[1 + \exp(g_0)\exp(E_{\text{in}}/E_{\text{sat}} - 1)] $$

where, $E_{\text{in}}$ is the energy of the input laser beam, $E_{\text{sat}}$ is the saturation energy of the gain medium, $E_{\text{out}}$ is the energy of the output laser beam and $g_0$ is a gain coefficient derived from the pressure of the gas mixture. Values of some or all of these parameters may be included in the parameter values provided to the node.

As another example, another of the nodes may receive a parameter value that indicates whether an interlock in the laser system has been tripped such that the laser beam is prevented from exiting the laser system. In that case, the model function may be a binary step function such that the score for the node is one if the interlock has been tripped and zero otherwise. The neural network may, for example, learn through training that, if the node has a score of one then a failure mode corresponding to the interlock having been tripped is much more likely to have occurred than any of the other failure modes that may occurred.

Subsets of the scores are provided to respective subsets M1 of the nodes of the second hidden layer HL2. Each subset M1 of the nodes is associated with a respective one of the modules of the system, e.g. the pre-amplifier module PAM or the main pulse module MPM. The scores are assigned to the modules depending on what part(s) of the system the parameter values relate to and to which module the part(s) correspond. Parameter values may relate to more than one part of the system and/or modules. Where, as described above, the parameter value is a gas pressure of a gas mixture, the parameter value may be provided to a subset of the nodes corresponding to the pre-amplifier module. Where, as described above, the parameter values relate to the centroid position and size of the laser beam, then the score may be provided to the subset M1 of the nodes of any of the modules that affect the centroid position.

Each subset M1 of the nodes, processes the subset of scores it receives to determine one or more failure mode values that are indicative of whether respective failure modes of the module associated with that subset M1 of nodes has occurred. In general, the scores are weighted, e.g. depending on how likely the contribution to the performance indicator is to have been caused by the module, i.e. different scores are combined in a weighted sum, with the weights (usually, but not necessarily) depending on the identities of the two nodes in the hidden layers HL1, HL2 that are connected to one another. The weighted sum is then processed using an activation function, which may be any suitable type of function, e.g. a sigmoid function, a tanh function, a ReLU function and so on. The activation function may include a bias term in some cases. The failure mode values may be probability values (e.g. values between 0 and 1) that respective failure (fault) modes have occurred (e.g. conditional probabilities that the respective failure modes have occurred given the measurements). In some instances, the second hidden layer HL2 may use a softmax function to generate the probability values.

The failure mode values are then provided to the nodes of the output layer OL, which then determine one or more output values indicative of whether respective failure modes of the system have occurred. The output layer OL may therefore determine how likely a particular failure mode is to have occurred taking into account the other potential failure modes that may have occurred within the various modules in the system. The nodes may, for example, form a weighted sum of the received output values and then process the weighted sum with an activation function, which may be any suitable type of function, e.g. a sigmoid function, a tanh function, a ReLU function and so on. The activation function may include a bias term in some cases. The output values may be probability values (e.g. values between 0 and 1) that respective failure modes have occurred (e.g. conditional probabilities that the respective failure modes have occurred given the measurements). In some instances, the output layer OL may use a softmax function to generate the probability values. In some cases, the output values may be indicative of a conditional probability that a particular failure mode has occurred taking into account the likelihood that the other failure modes may have occurred instead or as well. Alternatively, the output values may be respective binary values (e.g. 0 or 1) indicative of whether a corresponding failure mode has occurred. The nodes of the output layer OL may receive failure mode values from each of the nodes of the second hidden layer HL2 or from a subset of the nodes of the second hidden layer HL2 (or even a failure mode value from a single node of the second hidden layer HL2 in some cases). In some cases, the output layer OL may be a fully-connected layer.

For the case of the laser system SM described in connection with Figure 3, the failure modes may comprise, for example: (i) failure modes associated with the seed laser module SLM, e.g. the seed laser being misaligned, the EOM driver being defective; a photo-elastic modulator (PEM) being defective (ii) failure modes for the pre-amplifier module, e.g. molecular sieves being defective, gas mixture needing to be re-filled; (iii) failure modes associated with the isolator module SIM, e.g. that an interlock has been tripped. These failure modes are provided by way of example only. It will of course be appreciated that, in general, the failure modes will depend on both the system, the modules included in the system and/or the choice of performance indicator.

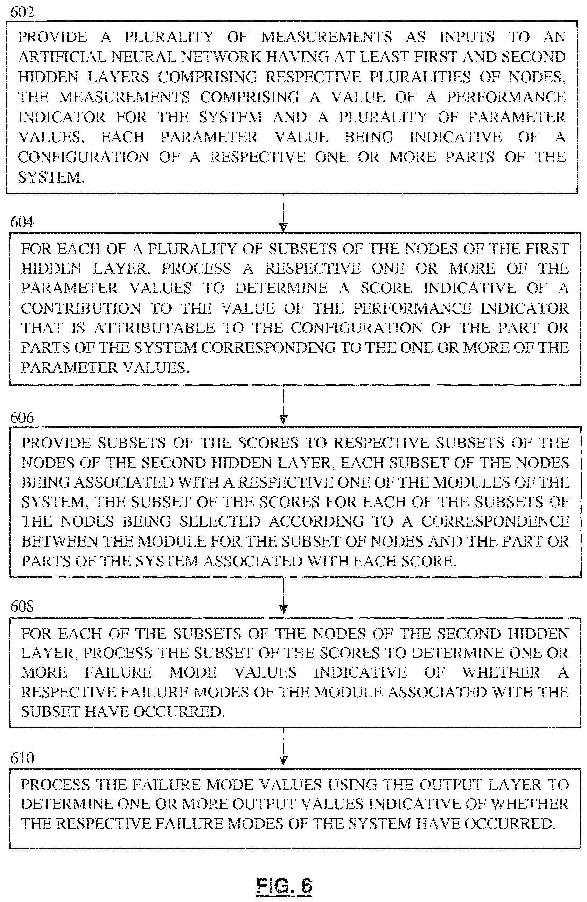

Figure 6 shows a flow chart of a method of identifying one or more failures for a system comprising multiple modules, each module having one or more failure modes. A first step (602) of the method it to provide a plurality of measurements as inputs to an artificial neural network having at least first and second hidden layers comprising respective pluralities of nodes, the measurements comprising a value of a performance indicator for the system and a plurality of parameter values, each parameter value being indicative of a configuration of a respective one or more parts of the system. A second step (604) is to, for each of a plurality of subsets of the nodes of the first hidden layer, process a respective one or more of the parameter values to determine a score indicative of a contribution to the value of the performance indicator that is attributable to the configuration of the part or parts of the system corresponding to the one or more of the parameter values. A further step (606) is to provide subsets of the scores to respective subsets of the nodes of the second hidden layer, each subset of the nodes being associated with a respective one of the modules of the system, the subset of the scores for each of the subsets of the nodes being selected according to a correspondence between the module for the subset of nodes and the part or parts of the system associated with each score. Another step (608) is to, for each of the subsets of the nodes of the second hidden layer, process the subset of the scores to determine one or more failure mode values indicative of whether respective failure modes of the module associated with the subset have occurred. A further step (610) is to process the failure mode values using the output layer to determine one or more output values indicative of whether the respective failure modes of the system have occurred.

During training of the neural network (e.g the neural network NN described in connection with Figure 5), the method may comprise an additional step (not shown) after step 606, in which the parameters (e.g. the weights and/or bias values associated with the inputs to each of the nodes of the hidden layers HL1, HL2, and the output layer OL) of the artificial neural network are adjusted to optimise a loss function comparing the output values of the artificial neural network for the measurements and the failure modes corresponding to the measurements that are known to have occurred (which may, e.g. be obtained from service logs and/or maintenance reports). The loss function compares a vector of the output values and a vector derived from the failure modes that are known to have occurred, e.g. a vector with respective elements corresponding to the failure modes, wherein an element corresponding to a failure mode that is known to have occurred is assigned a value of 1 and the other elements are assigned a value of 0. The loss function may take a variety of different forms, e.g. root mean square error, cross entropy loss etc. Optimisation of the loss function may be performed by backpropagation of gradients of the loss function, e.g. using stochastic gradient descent or mini-batch gradient descent.

Layers of the neural network may have also be trained separately from the other layers and subsets of the nodes in the layer(s) being trained may also be trained separately from the other nodes in the layer(s). For example, a subset of the nodes of the first hidden layer may be trained to optimise a model function (which may be encoded in the parameters of the subset of the nodes) to capture the dependence of the performance indicator on the parameter values, e.g. a model function corresponding to a physical process. In that case, training data comprising a plurality of data items may be used to train the subset of nodes, the data items comprising different parameter values and corresponding values of the performance indicator (which may be measured values and/or simulated values in some cases). The parameters of the nodes may then be adjusted to optimise a loss function comparing the predicted score indicative of a contribution to the value of the performance indicator that is output from the model function and the ("ground truth") value of the performance indicator. The subset of nodes may therefore, in some cases, be trained using data collected during servicing and/or maintenance of one or more of the modules and/or the system. The training may be a supervised learning procedure, e.g. carried out by backpropagation.

While specific embodiments of the invention have been described above, it will be appreciated that the invention may be practiced otherwise than as described.

The descriptions above are intended to be illustrative, not limiting. Thus it will be apparent to one skilled in the art that modifications may be made to the invention as described without departing from the scope of the claims set out below.

**Claims**

1. A computer-implemented method of identifying one or more failures in a system comprising multiple modules, each module having a respective one or more failure modes, the method comprising:

  providing a plurality of measurements as inputs to an artificial neural network having at least first and second hidden layers and an output layer, each of the layers comprising respective pluralities of nodes, the measurements comprising a value of a performance indicator for the system and a plurality of parameter values, each parameter value being indicative of a configuration of a respective one or more parts of the system;
  for each of a plurality of subsets of the nodes of the first hidden layer, processing a respective one or more of the parameter values to determine a score indicative of a contribution to the value of the performance indicator that is attributable to the configuration of the part or parts of the system corresponding to the one or more of the parameter values;
  providing subsets of the scores to respective subsets of the nodes of the second hidden layer, each subset of the nodes being associated with a respective one of the modules of the system, the subset of the scores for each of the subsets of the nodes being selected according to a correspondence between the module for the subset of nodes and the part or parts of the system associated with each score;
  for each of the subsets of the nodes of the second hidden layer, processing the subset of the scores to determine one or more failure mode values indicative of whether respective failure modes of the module associated with the subset have occurred; and
  processing the failure mode values using the output layer to determine one or more output values indicative of whether respective failure modes of the system have occurred.

2. A method according to claim 1, wherein processing the respective one or more of the parameter values to determine any of the scores comprises:

  providing the one or more parameter values as arguments to a corresponding model function that predicts the value of the performance indicator based on the one or more parameter values; and

calculating the score based on an output of the model function and, optionally, the value of the performance indicator for the system.

3. A method according to claim 2, wherein the model function comprises an artificial neural network trained to predict the value of the performance indicator based on the one or more parameter values.

4. A method according to claim 2 or 3, wherein the model function provides a model of a physical process performed by the part or parts of the system corresponding to the one or more parameter values.

5. A method according to any one of claims 2-4, wherein the plurality of measurements comprises a sequence of measurements made at different times.

6. A method according to any one of the preceding claims, wherein the artificial neural network has been trained to optimise a loss function for a plurality of measurements, the loss function comparing failure modes predicted from the output values for the measurements and the failure modes corresponding to the measurements that are known to have occurred.

7. A method according to any one of the preceding claims, further comprising selecting one or more of the modules based on the output values, whereby the selected one or more of the modules may be serviced or replaced.

8. A method according to any one of the preceding claims, further comprising selecting one or more parts of the system based on the output values, whereby the selected one or more parts of the system may be serviced or replaced.

9. A method according to any one of the preceding claims, wherein the system is a laser system for generating a laser beam and the performance indicator for the system is a power of the laser beam generated by the laser system and the parameter values comprise one or more parameter values indicative of properties of the laser beam in one or more of the modules.

10. A method according to claim 9, wherein the properties of the laser beam comprise one or more of: respective positions of the laser beam in a plane perpendicular to the beam in the one or more of the modules; respective widths of the laser beam in the one or more of the modules; and respective powers of the laser beam in the one or more of the modules.

11. A method according to claim 9 or 10, wherein processing the respective one or more of the parameter values to determine the score comprises:

> using the one or more parameter values indicative of properties of the laser beam to determine an expected power of the laser beam generated by the laser system; and
> determining the score based on a comparison of the expected power with the value of the power of the laser beam generated by the system provided as the value of the performance indicator.

12. A method according to any one of the preceding claims, wherein each output value is indicative of a respective contribution to the value of the performance indicator that is attributable to the failure mode associated with the output value.

13. A computer-implemented method of training an artificial neural network to identify one or more failures in a system comprising multiple modules, each of the modules having one or more failure modes, the artificial neural network artificial neural network having at least first and second hidden layers and an output layer, each layer comprising respective pluralities of nodes, the method comprising:

> providing a plurality of measurements as inputs to the artificial neural network, the measurements comprising a value of a performance indicator for the system and a plurality of parameter values, each parameter value being indicative of a configuration of a respective one or more parts of the system;
> for each of a plurality of subsets of the nodes of the first hidden layer, processing a respective one or more of the parameter values to determine a score indicative of a contribution to the value of the performance indicator that is attributable to the configuration of the part or parts of the system corresponding to the one or more of the parameter values;
> providing subsets of the scores to respective subsets of the nodes of the second hidden layer, each subset of the nodes being associated with a respective one of the modules of the system, the subset of the scores for each of the subsets of the nodes being selected according to a correspondence between the module for the subset of nodes and the part or parts of the system associated with each score; and
> for each of the subsets of the nodes of the second hidden layer, processing the subset of the scores to determine one or more failure mode values indicative of whether respective failure modes of the module associated with the subset have occurred;
> processing the failure mode values using the output layer to determine one or more output values indicative of whether respective failure modes of the system have occurred; and adjusting parameters of the artificial neural network to optimise a loss function comparing the output values of the artificial neural network for the measurements and the failure modes corresponding to the measurements that are known to have occurred.

14. A system comprising:

> one or more computers; and
> one or more storage devices storing instructions that, when executed by the one or more computers, cause the one or more computers to perform the respective operations of the method of any one of claims 1 to 12.

15. One or more computer-readable storage media storing instructions that when executed by one or more computers cause the one or more computers to perform the respective operations of the method of any one of claims 1 to 12.

**FIG. 1**

**FIG. 2**

FIG. 3

PI

S1

S2

t

FIG. 4

NN

N1

N2

M1

OV

PI

PV

IL

HL1

HL2

OL

FIG. 5

602

PROVIDE A PLURALITY OF MEASUREMENTS AS INPUTS TO AN ARTIFICIAL NEURAL NETWORK HAVING AT LEAST FIRST AND SECOND HIDDEN LAYERS COMPRISING RESPECTIVE PLURALITIES OF NODES, THE MEASUREMENTS COMPRISING A VALUE OF A PERFORMANCE INDICATOR FOR THE SYSTEM AND A PLURALITY OF PARAMETER VALUES, EACH PARAMETER VALUE BEING INDICATIVE OF A CONFIGURATION OF A RESPECTIVE ONE OR MORE PARTS OF THE SYSTEM.

604

FOR EACH OF A PLURALITY OF SUBSETS OF THE NODES OF THE FIRST HIDDEN LAYER, PROCESS A RESPECTIVE ONE OR MORE OF THE PARAMETER VALUES TO DETERMINE A SCORE INDICATIVE OF A CONTRIBUTION TO THE VALUE OF THE PERFORMANCE INDICATOR THAT IS ATTRIBUTABLE TO THE CONFIGURATION OF THE PART OR PARTS OF THE SYSTEM CORRESPONDING TO THE ONE OR MORE OF THE PARAMETER VALUES.

606

PROVIDE SUBSETS OF THE SCORES TO RESPECTIVE SUBSETS OF THE NODES OF THE SECOND HIDDEN LAYER, EACH SUBSET OF THE NODES BEING ASSOCIATED WITH A RESPECTIVE ONE OF THE MODULES OF THE SYSTEM, THE SUBSET OF THE SCORES FOR EACH OF THE SUBSETS OF THE NODES BEING SELECTED ACCORDING TO A CORRESPONDENCE BETWEEN THE MODULE FOR THE SUBSET OF NODES AND THE PART OR PARTS OF THE SYSTEM ASSOCIATED WITH EACH SCORE.

608

FOR EACH OF THE SUBSETS OF THE NODES OF THE SECOND HIDDEN LAYER, PROCESS THE SUBSET OF THE SCORES TO DETERMINE ONE OR MORE FAILURE MODE VALUES INDICATIVE OF WHETHER A RESPECTIVE FAILURE MODES OF THE MODULE ASSOCIATED WITH THE SUBSET HAVE OCCURRED.

610

PROCESS THE FAILURE MODE VALUES USING THE OUTPUT LAYER TO DETERMINE ONE OR MORE OUTPUT VALUES INDICATIVE OF WHETHER THE RESPECTIVE FAILURE MODES OF THE SYSTEM HAVE OCCURRED.

FIG. 6

Europäisches
Patentamt

European
Patent Office

Office européen
des brevets

## EUROPEAN SEARCH REPORT

Application Number

EP 22 20 3520

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/327364 A1 (HUNSCHE STEFAN [US] ET AL) 13 October 2022 (2022-10-13) * paragraphs [0010], [0164] – [0184]; figures 1, 4 * | 1-15 | INV. G06N20/00 ADD. G06N3/084 |
| A | US 2021/048741 A1 (LUGG ROBERT M [US] ET AL) 18 February 2021 (2021-02-18) * paragraphs [0004] – [0007], [0032] – [0048]; figure 1 * | 1-15 | |
| A | US 2017/200264 A1 (PARK ALLEN [US] ET AL) 13 July 2017 (2017-07-13) * the whole document * | 1-15 | |

TECHNICAL FIELDS
SEARCHED       (IPC)

G06N

The present search report has been drawn up for all claims

| Place of search | Date of completion of the search | Examiner |
|---|---|---|
| Munich | 29 March 2023 | Winkelbauer, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 20 3520**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-03-2023**

| Patent document cited in search report | | | Publication date | Patent family member(s) | | | Publication date |
|---|---|---|---|---|---|---|---|
| US 2022327364 | A1 | | 13-10-2022 | CN | 114402262 | A | 26-04-2022 |
| | | | | KR | 20220038167 | A | 25-03-2022 |
| | | | | TW | 202113924 | A | 01-04-2021 |
| | | | | TW | 202215167 | A | 16-04-2022 |
| | | | | US | 2022327364 | A1 | 13-10-2022 |
| | | | | WO | 2021037484 | A1 | 04-03-2021 |
| US 2021048741 | A1 | | 18-02-2021 | CN | 114222993 | A | 22-03-2022 |
| | | | | JP | 2022544585 | A | 19-10-2022 |
| | | | | KR | 20220041117 | A | 31-03-2022 |
| | | | | TW | 202121050 | A | 01-06-2021 |
| | | | | US | 2021048741 | A1 | 18-02-2021 |
| | | | | WO | 2021034495 | A1 | 25-02-2021 |
| US 2017200264 | A1 | | 13-07-2017 | CN | 108463874 | A | 28-08-2018 |
| | | | | IL | 260102 | A | 31-07-2018 |
| | | | | KR | 20180094111 | A | 22-08-2018 |
| | | | | TW | 201732305 | A | 16-09-2017 |
| | | | | US | 2017200264 | A1 | 13-07-2017 |
| | | | | WO | 2017123561 | A1 | 20-07-2017 |

EPO FORM P0459